# EUROPÄISCHE PATENTSCHRIFT

(11) **EP 4 426 921 B1**
(45) Veröffentlichungstag und Bekanntmachung des Hinweises auf die Patenterteilung: **18.06.2025**
(21) Anmeldenummer: 22812598.5
(22) Anmeldetag: 02.11.2022
(51) Int. Cl.: F01D 11/02, F16C 33/80, F16J 15/447, F16C 33/74, F16J 15/00

(54) **WARTUNGSARME DICHTUNGSANORDNUNG FÜR EIN VERTIKAL AUSGERICHTETES INDUSTRIEGETRIEBE**
LOW-MAINTENANCE SEALING ARRANGEMENT FOR A VERTICALLY ALIGNED INDUSTRIAL GEAR
AGENCEMENT D'ÉTANCHÉITÉ NÉCESSITANT PEU D'ENTRETIEN POUR UN ENGRENAGE INDUSTRIEL À ALIGNEMENT VERTICAL

(30) Priorität: 04.11.2021 EP 21206455
(43) Veröffentlichungstag der Anmeldung: 11.09.2024
(73) Patentinhaber: Flender GmbH, 46395 Bocholt (DE)
(72) Erfinder: BRUNS, Christoph, 46395 Bocholt (DE); KLEIN-HITPASS, Michael, 46395 Bocholt (DE); TEGELKAMP, Michael, 46395 Bocholt (DE); JOSTEN, Guido, 46395 Bocholt (DE)
(74) Vertreter: Michalski Hüttermann & Partner Patentanwälte mbB
(86) Internationale Anmeldenummer: PCT/EP2022/080486
(87) Internationale Veröffentlichungsnummer: WO 2023/078886

(56) Entgegenhaltungen:
- GB-A- 783 118
- SE-C2- 507 745
- US-A- 4 209 178
- US-A- 4 269 418

## Beschreibung

Die Erfindung betrifft eine Dichtungsanordnung für ein vertikal ausgerichtetes Industriegetriebe, das besonders wartungsarm ist, sowie ein derartiges Industriegetriebe.

Aus DE 10 2013 212 464 A1 ist ein Zwei-Planetenradstufen aufweisendes Industriegetriebe zum Antrieb einer Vertikalmühle bekannt, bei dem die Planetenradstufen vertikal ausgerichtete Wellen und feststehende Hohlräder aufweisen. Die relativ zueinander bewegbaren Getriebekomponente der Planetenradstufen sind mit Schmieröl geschmiert und über eine Dichtungsanordnung zur Umgebung hin abgedichtet.

Aus GB 783 118 A ist eine Dichtungsanordnung, gemäß der Präambel von Anspruch 1, für eine vertikal verlaufende Turbinenwelle einer Gasturbine zum Antrieb eines Hubschraubers bekannt, wobei die Turbinenwelle von Abgasen der Gasturbine angetrieben wird und an einem Ende mit einem Kompressor zur Zufuhr von Frischluft in die Gasturbine und an dem anderen Ende mit einem zu Antrieb eines Hubschrauberrotor vorgesehenen Getriebe verbunden ist. Die Turbinenwelle ist über ein Wälzlager in einem feststehenden Turbinengehäuse gelagert. Unterhalb des Wälzlagers ist ein ringförmiger Trog ausgebildet, von dem ein entgegen der Schwerkraftrichtung angeschrägt verlaufender Spalt bis zu einem oberen Ende einer mit der Turbinenwelle verbundenen Hülse verläuft. An der Hülse ist eine mehrere zur Hülse geöffnete Taschen und mehrere zwischen den Taschen ausgebildete Spaltdichtungen aufweisende Labyrinthdichtung ausgebildet.

Es besteht ein ständiges Bedürfnis Industriegetriebe wartungsarm und verschleißarm auszugestalten, um kostenintensive Stillstandzeiten zu minimieren.

Es ist die Aufgabe der Erfindung Maßnahmen aufzuzeigen, die ein wartungsarmes Industriegetriebe ermöglichen.

Die Lösung der Aufgabe erfolgt durch eine Dichtungsanordnung mit den Merkmalen des Anspruchs 1 und ein Industriegetriebe mit den Merkmalen des Anspruchs 14. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Dichtungsanordnung für ein Industriegetriebe, mit einer vertikal ausgerichteten unteren Leistungswelle zum Drehmomentaustausch mit dem Industriegetriebe, einer radial außerhalb zu der Leistungswelle vorgesehenen Getriebekomponente des Industriegetriebes, wobei die Leistungswelle im bestimmungsgemäßen Betrieb eine größere Drehzahl als die Getriebekomponente aufweist, wobei zwischen der Getriebekomponente und der Leistungswelle eine berührungslose erste Dichtung vorgesehen ist, wobei die erste Dichtung einen zur Schwerkraftrichtung angeschrägten und entgegen der Schwerkraftrichtung von radial außen nach radial innen verlaufenden konischen ersten Dichtspalt aufweist, wobei der erste Dichtspalt mit einem zumindest zu einem Großteil in Schwerkraftrichtung nach unten verlaufenden ersten Überlaufkanal kommuniziert, wobei der erste Überlaufkanal in Schwerkraftrichtung unterhalb des ersten Dichtspalts endet und, insbesondere zur Vermeidung einer Labyrinthdichtung, als Ringspalt ausgebildet ist.

Eine Leckage von Schmiermittel, insbesondere Schmieröl, kann insbesondere zwischen relativ zueinander rotierenden Bauteilen des Industriegetriebes auftreten. Um dies zu verhindern, können berührende Dichtungen wie beispielsweise ein Radialwellendichtring oder eine Filzdichtung vorgesehen werden. Berührende Dichtungen verschleißen jedoch und müssen regelmäßig gewartet und ausgetauscht werden. Dies ist insbesondere bei Industriegetrieben problematisch, da dort hohe Relativgeschwindigkeiten, hohe Kräfte und hohe Temperaturen auftreten können, die zu Verformungen der Bauteile und einen erhöhten Verschleiß der berührenden Dichtungen führen. Zudem ist in staubintensiven Anwendungen, wie beispielsweise bei einer zum Zerkleinern von Feststoffen vorgesehenen Mühle häufig eine staubfeste Abkapselung vorgesehen, so dass die Zugänglichkeit von Verschleißteilen grundsätzlich schwierig ist und eine zeitintensive Wartung erfordert. Die Verwendung von berührungslosen Dichtungen, die auch bei den in einem Industriegetrieben auftretenden Relativgeschwindigkeiten und Temperaturen einen Kontakt der relativ zueinander drehenden Bauteile vermeidet, weisen aufgrund des verbleibenden relativ großen Dichtspalts eine geringe Dichtwirkung aus.

Bei der Erfindung wird die Erkenntnis ausgenutzt, dass bei einem vertikal ausgerichteten Industriegetriebe, bei dem beispielsweise eine Leistungswelle ein Antriebsdrehmoment von unten nach oben in das Innere eines Getriebegehäuses des Industriegetriebes einleiten oder ein Abtriebsdrehmoment von oben nach unten aus dem Inneren des Getriebegehäuses des Industriegetriebes ausleiten kann, Schwerkrafteffekte und/oder Fliehkrafteffekte für die Verbesserung der Dichtwirkung einer berührungslosen Dichtung ausgenutzt werden können.

Wenn das im vertikal ausgerichteten Industriegetriebe vorgesehene Schmiermittel die Dichtungsanordnung passieren sollte, müsste das Schmiermittel entlang des ersten Dichtspalts der berührungslosen ersten Dichtung entgegen der Schwerkraftrichtung bewegt werden. Die Dichtwirkung der ersten Dichtung kann dadurch leicht über eine entsprechende große Erstreckung in vertikaler Richtung ausreichend hoch eingestellt werden. Bei einer im Vergleich zu einer Labyrinthdichtung sehr einfachen und kostengünstig herstellbaren konstruktiven Ausgestaltung der ersten Dichtung lässt sich eine hohe Dichtwirkung erreichen. Der erste Dichtspalt kann zumindest in einem überwiegenden Teilbereich insbesondere durch zwei aufeinander zu weisenden Kegelflächen begrenzt sein, die einfach zu fertigen sind und zumindest in einem Teilbereich entlang der Strömungsrichtung des ersten Dichtspalts einen konstanten radialen Abstand zwischen den aufeinander zu weisenden Kegelflächen ausbilden können. Durch den angeschrägten Verlauf des Dichtspalts, verringert sich der mittlere Durchmesser des ersten Dichtspalts entlang der Strömungsrichtung entgegen der Schwerkraftrichtung, wodurch sich durch eine einfache konstruktive Maßnahme entlang der designierten Strömungsrichtung entgegen der Schwerkraftrichtung in dem ersten Dichtspalt automatisch der Strömungsquerschnitt verringert. Leckendes Schmieröl müsste daher bei einer Leckage über den ersten Dichtspalt nicht nur gegen die Schwerkraft, sondern auch gegen einen sich allmählich erhöhenden Strömungswiderstand infolge der Verringerung des Strömungsquerschnitts ankämpfen. Da aber gleichzeitig zwischen den aufeinander zu weisenden Kegelflächen des ersten Dichtspalts der Abstand zwischen den Kegelflächen im Wesentlichen konstant gehalten werden kann, können unnötige Kapillareffekte trotz des sich verringernden Strömungsquerschnitts vermieden werden. Die Kegelflächen können insbesondere zumindest in einem Teilbereich im Wesentlichen parallel zueinander und/oder in einem anderen Teilbereich zueinander leicht angeschrägt verlaufen. Der Abstand der Kegelflächen kann insbesondere derart gewählt sein, dass ein ansaugender Kapillareffekt vermieden oder gering gehalten ist und/oder ein Passieren des ersten Dichtspalts durch hochspritzendes Schmiermittel blockiert oder gering gehalten ist. Der Dichtspalt zwischen den Kegelflächen kann zumindest in einem jeweiligen Teilbereich einen im Wesentlichen konstanten Strömungsquerschnitt und/oder einen entgegen der Schwerkraftrichtung sich verjüngenden und/oder erweiternden Strömungsquerschnitt aufweisen.

Falls Schmiermittel den ersten Dichtspalt der ersten berührungslosen Dichtung passieren sollte, kann dieser in der Regel sehr geringe Anteil des Schmiermittels über den als Ringspalt ausgestalteten und insbesondere als Spaltdichtung wirkenden Überlaufkanal von der ersten Dichtung weg abgeführt werden. Der Überlaufkanal ist als Ringspalt zwischen der Leistungswelle und einem mit der Getriebekomponente verbundenen Bauteil, insbesondere der erste Dichtungsdeckel, ausgebildet. Der Überlaufkanal weist insbesondere einen im Wesentlichen konstanten Strömungsquerschnitt auf, wobei gegebenenfalls vorgesehene Übergänge am Anfang und/oder am Ende des Überlaufkanals bezüglich des konstanten Strömungsquerschnitts unberücksichtigt bleiben. Der Überlaufkanal kann dadurch als eine besonders einfach ausgestaltete Spaltdichtung wirken, wobei eine aufwändiger herzustellende und aufwändiger zu wartende Labyrinthdichtung, die eine Mehrzahl von zwischen jeweils zwei nachfolgenden radial abstehenden Stegen ausgebildete Ringtaschen aufweist, vermieden werden kann. Vorzugsweise besteht der Überlaufkanal aus einer einzelnen Spaltdichtung, insbesondere zu dem Zweck eine Labyrinthdichtung zu vermeiden. Der Überlaufkanal kann eine zumindest über einen Großteil der vertikalen Erstreckung, vorzugsweise über die gesamte vertikale Erstreckung, des Überlaufkanals verlaufende zylindrische äußere Kanalwand und eine über die gesamte vertikale Erstreckung des Überlaufkanals verlaufende zylindrische innere Kanalwand aufweisen, wobei insbesondere die innere Kanalwand durch die Leistungswelle selber, das heißt nicht durch eine mit der Leistungswelle verbundene Hülse, ausgebildet ist. Vorzugsweise ist die äußere Kanalwand des Überlaufkanals und die radial innere (Kegel-)Fläche des ersten Dichtspalts einstückig mit einem gemeinsamen Bauteil, insbesondere einem ersten Dichtungsdeckel, ausgestaltet, wobei insbesondere dieses gemeinsame Bauteil ein ringförmiges Sammelvolumen zum Sammeln von Schmiermittel unterhalb des Lagers und unterhalb des ersten Dichtspalt auf.

Zudem kann im bestimmungsgemäßen Betrieb, wenn die Leistungswelle rotiert, eine Relativdrehung zwischen der radial inneren und der radial äußeren Begrenzung des ersten Dichtspalts auftreten. Das in den ersten Dichtspalt eindringende Schmiermittel kann von der radial inneren und/oder der radial äußeren Begrenzung des ersten Dichtspalts aufgrund von Reibungseffekten mitgenommen und über die Umfangsfläche verteilt werden, wodurch das Schmiermittel an der zugeordneten Begrenzung schwerkraftgetrieben zurückfließen kann. Zudem kann das Schmiermittel infolge des rotatorischen Bewegungsanteils fliehkraftgetrieben nach radial außen gedrückt werden und an der von der radial äußeren Begrenzung des ersten Dichtspalts ausgebildeten schiefen Ebene nach unten gedrückt werden. Zusätzlich zu der sowieso an dem Schmiermittel angreifenden Schwerkraft kann ein entlang der schiefen Ebene der radial äußeren Begrenzung des ersten Dichtspalts gerichteter Anteil der an dem Schmiermittel angreifenden Fliehkraft das Schmiermittel in Schwerkraftrichtung aus den ersten Dichtspalt nach unten befördern. Dadurch ist zu erwarten, dass im regulären Betrieb so gut wie kein Schmiermittel den ersten Dichtspalt passieren kann und zu dem Überlaufkanal gelangt. Daher ist es ausreichen den Überlaufkanal als einfachen Ringspalt mit einer Wirkung als Dichtspalt auszugestalten und eine Labyrinthdichtung zu vermeiden, da bereits ein geringer Strömungswiderstand am oberen Ende des Überlaufkanals infolge der geringen radialen Erstreckung des Überlaufkanals ausreicht, um ein Eindringen des Schmiermittels in den Überlaufkanal solange zu verzögern, dass das Schmiermittel durch Fliehkrafteffekte von dem Überlaufkanal weg nach radial außen zu dem ersten Dichtspalt zurück gefördert wird. Selbst wenn Schmiermittel entgegen der Schwerkraft in den ersten Dichtspalt der ersten Dichtung gelangt, kann die einfache aber effektive Formgestaltung des ersten Dichtspalts das Schmiermittel ohne Verschleißeffekte zurück nach radial außen und nach unten fördern, so dass mit Hilfe der Dichtungsanordnung eine wartungsarmes und kostengünstiges Industriegetriebe ermöglicht ist.

Die Leistungswelle kann durch eine, insbesondere von einem Getriebegehäuse bereitgestellte, Außenhülle des Industriegetriebes am unteren Ende der Außenhülle ein Drehmoment übertragen. Die Leistungswelle kann insbesondere ein in dem Industriegetriebe gewandeltes Drehmoment als Abtriebswelle aus dem Industriegetriebe ausleiten und beispielsweise eine Mühlenwelle einer Vertikalmühle antreiben. Es ist aber auch möglich, dass die Leistungswelle mit einem Antriebsmotor verbunden sein kann und als Antriebswelle ein Drehmoment in des Industriegetriebe einleitet. Die Leistungswelle des Industriegetriebes kann insbesondere eine mit einem Sonnenrad eines Planetengetriebes verbundene Sonnenwelle oder eine mit einem Planetenträger des Planetengetriebes verbundene Platenträgerwelle sein. Die Leistungswelle kann als Vollwelle oder Hohlwelle ausgestaltet sein. Die Leistungswelle selbst oder ein mit der Leistungswelle verbundenes Bauteil kann insbesondere eine Begrenzung des ersten Dichtspalts ausbilden. Die Getriebekomponente kann insbesondere unbeweglich feststehend oder langsamer als die Leistungswelle drehend ausgestaltet sein. Die Getriebekomponente kann insbesondere ein Hohlrad eines Planetengetriebes und/oder ein Getriebegehäuse sein. Vorzugsweise weist das Industriegetriebe ein Planetengetriebe mit einem feststehenden Hohlrad auf, das radial außen eine Außenhülle des Industriegetriebes ausbildet und an den Stirnseiten mit jeweils einem Teil eines feststehenden Getriebegehäuse verbunden ist. Vorzugsweise kann ein in Schwerkraftrichtung oberhalb der Getriebekomponente vorgesehenes Getriebegehäuse eine Abstützung für einen Antriebsmotor oder für einen von dem Industriegetriebe angetriebenen Drehteller einer Vertikalmühle ausbilden. Zwischen der Getriebekomponente und der relativ dazu drehbaren Leistungswelle kann insbesondere ein Lager, vorzugsweise mindestens ein Wälzlager, vorgesehen sein. Das Lager kann beispielsweise an der Getriebekomponente und der Leistungswelle oder der Getriebekomponente und einem anderen Bauteil des Industriegetriebes angreifen und diese drehbar zueinander lagern. Das Schmiermittel kann insbesondere zur Schmierung des Lagers vorgesehen sein und beispielsweise durch Schwerkrafteffekte von dem Lager zur ersten Dichtung gelangen. Das Schmiermittel kann zusätzlich oder alternativ zur Schmierung von Verzahnungseingriffen des Industriegetriebes vorgesehen sein und durch Verdrängung an Zahnflanken und/oder Schwerkrafteffekte zur ersten Dichtung gelangen.

Die berührungslose erste Dichtung besteht insbesondere ausschließlich aus nur dem einen einzelnen ersten Dichtspalt. Eine Kaskade von mehreren Dichtspalten, wie dies in einer berührungslosen Labyrinthdichtung vorgesehen wäre, kann bewusst vermieden werden. Mehrere zueinander beabstandete Lamellen, die jeweils einen zueinander versetzten Dichtspalt begrenzen, können vermieden werden. Die erste Dichtung kann sich in einem kegeligen ersten Dichtspalt erschöpfen. Der Herstellungsaufwand kann dadurch minimiert werden und/oder eine besonders robuste und wartungsarme Dichtung vorgesehen werden. Die erste Dichtung ist dadurch besonders einfach und kostengünstig mit besonders wenigen Bauteilen ausgestaltet. Insbesondere besteht die erste Dichtung aus genau zwei Bauteilen, die jeweils eine Seite des ersten Dichtspalts begrenzen.

Wenn bezüglich des Industriegetriebes und/oder der Dichtungsanordnung auf eine vertikale Richtung oder eine Schwerkraftrichtung abgestellt wird, bezieht sich dies auf die bestimmungsgemäße Einbaulage, bei der die Mittellinien beziehungsweise Drehachse der Getriebekomponente und der Leistungswelle in vertikaler Richtung, also entlang der Schwerkraftrichtung, ausgerichtet sind.

Ein Industriegetriebe ist ein Getriebe, das in Industrieanlagen besonders großen Lasten ausgesetzt ist. In Abgrenzung zu Turbomaschine und/oder Hubschrauberantrieben, muss das Industriegetriebe bei vergleichsweise geringeren Drehzahlen besonders großen Drehmomenten standhalten. Das Industriegetriebe ist hierzu entsprechend massiv ausgestaltet. Ein typisches Industriegetriebe weist in der Regel ein Eigengewicht von mindestens 500 kg auf, wobei typische Industriegetriebe ein Eigengewicht von über 1 t, insbesondere mindestens 5 t oder mindestens 10 t aufweist. Die Leistungswelle, über welche die Leistung in das Industriegetriebe eingeleitet wird, ist für die Leistung des Industriegetriebes dimensioniert und weist daher ebenfalls eine sehr massive Ausgestaltung, insbesondere einen vergleichsweise großen Durchmesser auf. Die Dichtungsanordnung für die Leistungswelle ist daher entsprechend groß, insbesondere bezüglich der Innendurchmesser, dimensioniert. Gleichzeitig können die Bauteile, insbesondere die Gehäuseteile, in der näheren Umgebung der Leistungswelle und/oder des Industriegetriebes entsprechend massiv ausgestaltet sein, so dass die Dichtungsanordnung sehr leicht und ohne größere Anpassungen angebunden werden kann. Vorzugsweise lassen sich Funktionsbauteile der Dichtungsanordnung einstückig durch sowieso vorgesehene Getriebekomponenten und/oder Gehäuseteile ausbilden, die lediglich bezüglich ihrer Formgestaltung für ihre Funktionalität in der Dichtungsanordnung angepasst sind. Das Industriegetriebe kann mit einer mechanischen Anwendung verbunden sein, bei der es sich beispielsweise um ein Förderband handelt, mit dessen Hilfe einem Zerkleinerer recyclingfähige Materialen aus, gegebenenfalls zuvor getrennten und/oder sortierten, Abfallen oder Ähnliches, zugeführt werden können. Bei der mechanischen Anwendung kann es sich beispielsweise auch um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierten, Abfällen oder Ähnliches handeln.

Insbesondere ist eine radial innere Mantelfläche des ersten Dichtspalts drehfest mit der Getriebekomponente und eine radial äußere Mantelfläche des ersten Dichtspalts drehfest mit der Leistungswelle befestigt. Die jeweilige Mantelfläche ist zumindest über einen, vorzugsweise überwiegenden, Teilbereich insbesondere konisch, also insbesondere als Außenkegelstumpf oder Innenkegelstumpf, ausgestaltet. Die jeweilige Mantelfläche kann eine Begrenzung des ersten Dichtspalts in radialer Richtung ausbilden. Vorzugsweise erstreckt sich die jeweilige Mantelfläche über die gesamte vertikale Erstreckung des ersten Dichtspalts, so dass eine Trennfuge innerhalb der jeweiligen Mantelfläche vermieden ist. Da die Getriebekomponente, insbesondere koaxial, radial außerhalb zur Leistungswelle vorgesehen ist und die mit der Getriebekomponente unmittelbar oder mittelbar befestigte Mantelfläche des ersten Dichtspalts an der radial inneren Begrenzung des ersten Dichtspalts vorgesehen ist, kann sich eine im Wesentlichen U-förmige Umgreifung der mit der Leistungswelle unmittelbar oder mittelbar befestigten, die radial äußere Begrenzung ausbildende Mantelfläche des ersten Dichtspalts ergeben. Dies bildet eine Schikane für den Massenstrom des leckenden Schmiermittels aus, so dass bereits eine Verringerung der Strömungsgeschwindigkeit des leckenden Schmiermittels erreicht ist, die ein Passieren des ersten Dichtspalts erschwert. Zudem kann hochspitzendes Schmiermittel leichter durch das die radial innere Mantelfläche insbesondere im Wesentlichen U-förmig umgreifende und mit der Leistungswelle verbundene Material der radial äußeren Mantelfläche zurückgehalten werden. Das die radial äußere Mantelfläche ausbildende Material kann einen Spritzschutz für den ersten Dichtspalt ausbilden.

Vorzugsweise ist die Getriebekomponente über ein einen Lagerspalt überbrückendes Lager relativ drehbar zur Leistungswelle gelagert, wobei der erste Dichtspalt mit dem Lagerspalt kommuniziert. Das für die Schmierung des Lagers, insbesondere Wälzlager, vorgesehene Schmiermittel, insbesondere Schmieröl, kann aus dem Lager verdrängt werden und, insbesondere schwerkraftgetrieben, zur ersten Dichtung gelangen. Beispielsweise kann das Lager einen Innenring und einen Außenring aufweisen, die um eine vertikal verlaufende Achse drehbar sind, wobei das im Lager vorgesehene Schmiermittel in Schwerkraftrichtung nach unten aus dem Lager austreten kann. Das Schmiermittel kann in einem Volumen zwischen dem Lagerspalt und dem ersten Dichtspalt zurückgehalten werden. Insbesondere kann zumindest ein Teil des Schmiermittels, das trotzdem in den ersten Dichtspalt gelangt ist, schwerkraftgetrieben und/oder fliehkraftgetrieben in dieses Volumen ohne externe Hilfsmittel, also passiv, zurückgeführt werden. Vorzugsweise ist mit dem zwischen dem Lagerspalt und dem ersten Dichtspalt vorgesehenen Volumen eine Ölrückführung zur aktiven und/oder passiven Abfuhr von Schmiermittel vorgesehen. Beispielsweise kann das Schmiermittel über die Ölrückführung zur Schmierung einer anderen Komponente des Industriegetriebes wiederverwendet werden. Da das aus dem Lager austretende Schmiermittel kaum über die erste berührungslose Dichtung durch den ersten Dichtspalt hindurch austreten kann, ist es möglich einen abdichtenden Lagerdeckel für das Lager einzusparen ohne eine signifikante Leckage befürchten zu müssen. Die Herstellungskosten sowie die Bauteileanzahl und der Wartungsaufwand können dadurch reduziert werden.

Besonders bevorzugt ist ein mit der Getriebekomponente verbundener ersten Dichtungsdeckel vorgesehen, wobei der erste Dichtungsdeckel zumindest einen Teil des ersten Dichtspalts radial innen begrenzt. Der erste Dichtungsdeckel kann einen Strömungspfad des Schmiermittels begrenzen und insbesondere an seiner zum ersten Dichtspalt weisenden Innenseite eine U-förmige Schikane für das Schmiermittel ausbilden. Der erste Dichtungsdeckel kann leicht durch eine axiale Relativbewegung relativ zu dem die radial äußere Begrenzung des ersten Dichtspalts ausbildenden Material montiert werden. Der erste Dichtungsdeckel kann insbesondere über in axialer Richtung, also insbesondere im Wesentlichen parallel zu einer Drehachse der Leistungswelle, verlaufende Befestigungsmittel, insbesondere Schrauben, mit der radial äußeren Getriebekomponente und/oder einem Getriebegehäuse verbunden werden. Eine Trennfuge des ersten Dichtungsdeckels zur Getriebekomponente und/oder zum Getriebegehäuse kann soweit nach radial außen versetzt und zu einem im Schwerkraftrichtung unteren Boden an der Innenseite des ersten Dichtungsdeckels beabstandet sein, dass das Schmiermittel nicht an die Trennfuge gelangen kann. Dadurch ist es sogar möglich ein Dichtelement in der Trennfuge einzusparen, wodurch die Bauteileanzahl reduziert ist. Alternativ kann sicherheitshalber ein kostengünstiges Dichtelement, beispielsweise ein O-Ring oder eine ringförmige Papierdichtung, in der Trennfuge vorgesehen sein.

Insbesondere weist der ersten Dichtungsdeckel ein in Schwerkraftrichtung unterhalb des ersten Dichtspalts vorgesehenes erstes Sammelvolumen zum Sammeln von Schmiermittel auf. Der erste Dichtungsdeckel kann an einem im Schwerkraftrichtung unteren Boden an der Innenseite des ersten Dichtungsdeckels das Sammelvolumen ausbilden. Vorzugsweise kann das Schmiermittel aus dem Sammelvolumen aktiv oder passiv abgeführt werden, so dass das Risiko, dass Schmiermittel aus dem Sammelvolumen in den ersten Dichtspalt der ersten berührungslosen Dichtung gelangt reduziert werden kann. Durch das Sammelvolumen kann das ankommende Schmiermittel zu dem ersten Dichtspalt in Schwerkraftrichtung beabstandet gesammelt werden, so dass auch hochspritzendes Schmiermittel kaum den ersten Dichtspalt erreichen kann. Es kann auch vorgesehen sein, dass zu sowieso vorgesehenen regelmäßigen Wartungszeitpunkten der erste Dichtungsdeckel zur Entnahme des seit der letzten Wartung gesammelten Schmiermittels aus dem Sammelvolumen demontiert wird. Zusätzlich oder alternativ kann auch vorgesehen sein, dass über eine mit dem Sammelvolumen kommunizierende verschließbare Ablauföffnung das seit der letzten Wartung gesammelte Schmiermittel entnommen werden kann.

Vorzugsweise weist die Leistungswelle einen hinterschnittenen ersten Kegelsitz zur radial äußeren Begrenzung des ersten Dichtspalts auf. Der erste Kegelsitz kann als separates Bauteil auf die Leistungswelle aufgesetzt sein oder einstückig mit der Leistungswelle ausgestaltet sein. Der erste Kegelsitz kann nach radial innen weisen und das die radial innere Begrenzung des ersten Dichtspalts ausbildende Material insbesondere im Wesentlichen U-förmig umgreifen. Der erste Kegelsitz kann beispielsweise durch ein spanabhebendes Bearbeitungsverfahren, insbesondere Drehen, in einer nach radial außen abstehenden Axialfläche der Leistungswelle kostengünstig erzeugt sein.

Insbesondere ist zwischen dem ersten Dichtspalt und dem ersten Überlaufkanal eine erste Rampe zur Ausbildung eines größeren Strömungsquerschnitts als im ersten Dichtspalt ausgeformt. Beispielsweise kann die sich Steigung der radial inneren Begrenzung des ersten Dichtspalts mit Übergang in die Rampe sprungartig, beispielsweise über einen Knick, oder allmählich, beispielsweise über eine Rundung, ändern. Zwischen der radial äußeren Begrenzung des ersten Dichtspalts kann sich in Schwerkraftrichtung oberhalb der radial inneren Begrenzung des ersten Dichtspalts in einem gemeinsamen Höhenbereich mit der Rampe eine beispielsweise trichterartige Vergrößerung des Strömungsquerschnitts von unten nach oben ergeben. Eventuell vorhandene Kapillareffekte in dem ersten Dichtspalt können sich dadurch auflösen oder zumindest verringern, so dass ein durch Kapillareffekte verursachte Stofftransport des Schmiermittels durch den ersten Dichtspalt im Bereich der Rampe beendet werden kann. Die Rampe kann zur Horizontalen angeschrägt verlaufen, so dass auf der Rampe befindliches Schmiermittel schwerkraftgetrieben zurück in den ersten Dichtspalt fließen kann. Dadurch kann den ersten Dichtspalt passierendes Schmiermittel automatisch zurückfließen, wodurch eine Leckage vermieden oder zumindest reduziert werden kann.

Besonders bevorzugt sind eine radial äußere Kanalwand des ersten Überlaufkanals, eine/die radial innere Mantelfläche des ersten Dichtspalts und eine Sammelfläche zur unteren Begrenzung eines/des in Schwerkraftrichtung unterhalb des ersten Dichtspalts vorgesehenes erstes Sammelvolumen zum Sammeln von Schmiermittel einstückig, insbesondere durch genau einen/den ersten Dichtungsdeckel, ausgebildet. Die Bauteileanzahl kann dadurch gering gehalten werden. Zudem wird hierbei die Erkenntnis ausgenutzt, dass das einstückige Bauteil leicht von unten auf die Leistungswelle aufgesteckt und in der designierten Endlage leicht mit der Getriebekomponente, insbesondere Hohlrad, und/oder einem feststehenden Gehäuseteil befestigt, insbesondere verschraubt werden kann. Hierzu kann insbesondere der sowieso vorgesehene erste Dichtungsdeckel verwendet werden, der bei einer Verwendung in einer Industrieapplikation sowieso massiv und stabil genug ausgestaltet ist, um die hierzu erforderliche Formgestaltung ausbilden zu können. Da ein Schleifkontakt mit der relativ rotierenden Leistungswelle vermieden ist, kann das einstückige Bauteil insbesondere auch aus Kunststoff hergestellt sein, so dass sich durch Kunststoffspritzguss eines, insbesondere thermoplastischen, Kunststoffs leicht die für den ersten Dichtspalt und den Überlaufkanal vorgesehene Formgestaltung erreichen lässt.

Vorzugsweise ist mit der Leistungswelle ein Zwischenstück drehfest verbunden, wobei das Zwischenstück eine zum ersten Überlaufkanal weisende Stirnseite zum schwerkraftgetriebene und/oder fliehkraftgetriebenen Abführen von aus dem ersten Überlaufkanal kommenden Schmiermittel nach radial außen aufweist. Das über den Überlaufkanal nach unten abtropfende Schmiermittel kann am unteren Ende des Überlaufkanals an der Stirnseite des Zwischenstücks auftreffen. Da das Zwischenstück mit der Leistungswelle drehfest verbunden ist, kann die Stirnseite des Zwischenstücks als Schleuderscheibe wirken und das Schmiermittel fliehkraftgetrieben nach radial außen von der Leistungswelle weg bewegen. Ein Stofftransport des Schmiermittels an einer Trennfuge zwischen dem Zwischenstück und der Leistungswelle, der schließlich zu einer Leckage führen könnte, ist dadurch vermieden. Die Stirnseite des Zwischenstücks kann insbesondere von radial innen nach radial außen zur Horizontalen nach unten angeschrägt verlaufen, so dass selbst bei einer stillstehenden Leistungswelle und fehlenden Fliehkräften das an der Stirnseite ankommende Schmiermittel schwerkraftgetrieben nach radial außen über die Stirnseite fließen kann. Das Schmiermittel kann beispielsweise an dem radial äußeren Ende der Stirnseite aufgefangen und/oder angeführt werden, um eine Leckage zu vermeiden.

Besonders bevorzugt weist die Leistungswelle eine einen Axialanschlag für das Zwischenstück ausbildende Stufe auf, wobei eine radiale Innenseite des Zwischenstücks radial weiter innen als der erste Überlaufkanal vorgesehen ist. Durch den zumindest geringfügigen radialen Versatz der Innenseite des Zwischenstücks zu dem radial inneren Rand des Überlaufkanals kann sichergestellt werden, dass an der Stirnseite des Zwischenstücks ankommendes Schmiermittel nach radial außen weggefördert wird, wo der Strömungswiderstand erheblich geringer als an der Trennfuge zwischen dem Zwischenstück und der Leistungswelle ist. Zudem kann die den Axialanschlag ausbildende Stufe die axiale Relativlage des Zwischenstücks zur Leistungswelle vorgeben. Vorzugsweise ist das Zwischenstück auf der Leistungswelle drehfest aufgepresst und hierzu bis zu einem Anschlagen an dem Axialanschlag der Stufe auf die Leistungswelle aufgeschoben.

Insbesondere ist in Schwerkraftrichtung unterhalb der ersten Dichtung zwischen der Getriebekomponente und der Leistungswelle eine berührungslose zweite Dichtung zur Bereitstellung eines Dichtwiderstands gegen die erste Dichtung passierendes Schmiermittel vorgesehen, wobei insbesondere die zweite Dichtung einen zur Schwerkraftrichtung angeschrägten und entgegen der Schwerkraftrichtung von radial außen nach radial innen verlaufenden konischen zweiten Dichtspalt aufweist. Die berührungslose zweite Dichtung kann sich insbesondere in Strömungsrichtung des Schmiermittels an die erste Dichtung, den nachfolgenden Überlaufkanal und die nachfolgende Stirnseite des Zwischenstücks anschließen. Die berührungslose zweite Dichtung kann insbesondere analog zu der wie vorstehend beschriebenen ersten Dichtung ausgestaltet sein. Die vorstehende Erläuterung der ersten Dichtung gilt analog für die zweite Dichtung. Die Dichtungsanordnung kann dadurch insbesondere im Wesentlichen zweistufig mit zwei berührungslosen Dichtungen, die jeweils einen kegeligen Dichtspalt aufweisen, der nur entgegen der Schwerkraftrichtung von dem Schmiermittel passiert werden kann.

Vorzugsweise ist vorgesehen, dass eine radial innere Mantelfläche des zweiten Dichtspalts drehfest mit der Getriebekomponente und eine radial äußere Mantelfläche des zweiten Dichtspalts drehfest mit der Leistungswelle befestigt ist und/oder ein mit der Getriebekomponente unmittelbar oder mittelbar verbundener zweiter Dichtungsdeckel vorgesehen ist, wobei der zweite Dichtungsdeckel zumindest einen Teil des zweiten Dichtspalts radial innen begrenzt und/oder der zweite Dichtungsdeckel ein in Schwerkraftrichtung unterhalb des zweiten Dichtspalts vorgesehenes zweites Sammelvolumen zum Sammeln und/oder Abführen von Schmiermittel aufweist und/oder das Zwischenstück einen zweiten hinterschnittenen Kegelsitz zur radial äußeren Begrenzung des zweiten Dichtspalts aufweist und/oder der zweite Dichtspalt mit einem zumindest zu einem Großteil in Schwerkraftrichtung nach unten verlaufenden zweiten Überlaufkanal kommuniziert und/oder zwischen dem zweiten Dichtspalt und dem zweiten Überlaufkanal eine zweite Rampe zur Ausbildung eines größeren Strömungsquerschnitts als im zweiten Dichtspalt ausgeformt ist. Die zweite Dichtung kann dadurch in Teilen oder vollständig analog zu der ersten Dichtung ausgestaltet sein, mit der Maßgabe, dass die zweite Dichtung in Schwerkraftrichtung unterhalb der ersten Dichtung angeordnet ist und die radial äußere Begrenzung des zweiten Dichtspalts nicht durch die Leistungswelle selbst, sondern durch das mit der Leistungswelle verbundene Zwischenstück ausgebildet ist. Zudem ist es möglich die zweite Dichtung auf einem im Vergleich zur ersten Dichtung geringeren Nenn-Durchmesser vorzusehen. Zudem kann der zweite Dichtungsdeckel mit dem ersten Dichtungsdeckel befestigt sein, so dass der zweite Dichtungsdeckel nur mittelbar mit der Getriebekomponente und/oder dem Getriebegehäuse verbunden ist.

Besonders bevorzug ist in Schwerkraftrichtung unterhalb der zweiten Dichtung eine mit dem zweiten Dichtspalt kommunizierende Enddichtung, insbesondere Labyrinthdichtung oder berührende Dichtung, vorgesehen, wobei die Enddichtung auf einem geringeren Radius als der erste Dichtspalt und der zweite Dichtspalt vorgesehen ist. Die Labyrinthdichtung ist insbesondere gefettet. Die Enddichtung kann an einem unteren Abschluss des Getriebegehäuses vorgesehen sein. Die Enddichtung ist dadurch im Vergleich zu der ersten Dichtung und der zweiten Dichtung leichter zugänglich und kann erforderlichenfalls leichter und schneller gewartet werden.

Ein Aspekt betrifft ferner ein Industriegetriebe, insbesondere zum Antrieb einer Vertikalmühle, mit einer vertikal ausgerichteten Leistungswelle zum Einleiten eines Drehmoments, wobei die Leistungswelle eine Planetenträgerwelle oder Sonnenwelle eines Planetengetriebes ist, und einer im Vergleich zur Leistungswelle im bestimmungsgemäßen Gebrauch langsamer drehenden oder stillstehenden Getriebekomponente, wobei die Getriebekomponente als Hohlrad und/oder Getriebegehäuse des Planetengetriebes ausgebildet ist, und einer Dichtungsanordnung, die wie vorstehend beschrieben aus- und weitergebildet sein kann, zum Zurückhalten von Schmiermittel. Selbst wenn Schmiermittel entgegen der Schwerkraft in den ersten Dichtspalt der ersten Dichtung gelangt, kann die einfache aber effektive Formgestaltung des ersten Dichtspalts das Schmiermittel ohne Verschleißeffekte zurück nach radial außen und nach unten fördern, so dass mit Hilfe der Dichtungsanordnung eine wartungsarmes und kostengünstiges Industriegetriebe ermöglicht ist. Das Industriegetriebe kann insbesondere im Übrigen wie in DE 10 2013 212 464 A1 beschreiben aus- und weitergebildet sein, vorzugsweise um eine Vertikalmühle, beispielsweise zum Zerkleinern von Feststoffen, auszubilden.

Ein nicht beanspruchter Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Dichtungsanordnung, die wie vorstehend beschrieben aus- und weitergebildet sein kann oder dem Industriegetriebe, das wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Dichtungsanordnung, die wie vorstehend beschrieben aus- und weitergebildet sein kann, oder dem Industriegetriebe, das wie vorstehend beschrieben aus- und weitergebildet sein kann, insbesondere durch 3D-Druck, und/oder bei einer Verarbeitung durch eine Datenverarbeitungseinrichtung zur Durchführung einer technischen Simulation eine Simulation der Funktionsweise der Dichtungsanordnung, die wie vorstehend beschrieben aus- und weitergebildet sein kann, oder dem Industriegetriebe, das die wie vorstehend beschrieben aus- und weitergebildet sein kann, durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen. Die Datenpakete des Datenagglomerat sind an die erfindungsgemäße Ausgestaltung der jeweiligen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung, insbesondere der Dichtungsanordnung und/oder des Industriegetriebes, darstellen, die eine virtuelle Untersuchung in Form einer Simulation oder eine reale Vergegenständlichung mit Hilfe eines additiven Fertigungsverfahrens ermöglicht. Hierbei kann insbesondere jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Mit Hilfe der Datenpakete des Datenagglomerats können in einer virtuellen Umgebung während einer technischen Simulation der einzelnen Bestandteile der jeweiligen Vorrichtung und ihrer Wechselwirkungen der physikalische Zustand und/oder die Veränderung physikalischer Parameter in Abhängigkeit verschiedener Randbedingungen und/oder über die Zeit der zugehörigen erfindungsgemäßen Vorrichtung berechnet und/oder vorhergesagt werden sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterverwendet werden. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden. Dies ermöglicht eine kostengünstige Herstellung von Prototypen und/oder computerbasierten Simulationen, um die Funktionsweise der Dichtungsanordnung und/oder des Industriegetriebes zu studieren, Probleme im konkreten Anwendungsfall zu identifizieren und Verbesserungen zu finden. Selbst wenn Schmiermittel entgegen der Schwerkraft in den ersten Dichtspalt der ersten Dichtung gelangt, kann die einfache aber effektive Formgestaltung des ersten Dichtspalts das Schmiermittel ohne Verschleißeffekte zurück nach radial außen und nach unten fördern, so dass mit Hilfe der Dichtungsanordnung eine wartungsarmes und kostengünstiges Industriegetriebe ermöglicht ist, was mit Hilfe des Datenagglomerats leicht und kostengünstig überprüft werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: einen unteren Teil einer Industriegetriebes,
Fig. 2: eine für das Industriegetriebe aus Fig. 1 vorgesehene Dichtungsanordnung.

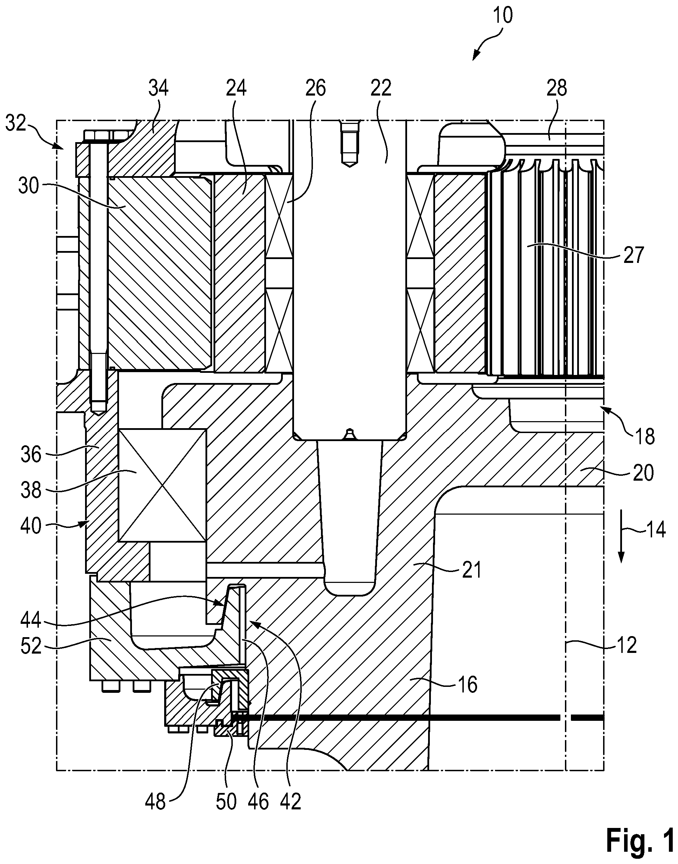

Das in Fig. 1 teilweise dargestellte Industriegetriebe 10 kann insbesondere für eine Vertikalmühle zum Zerkleinern von Feststoffen verwendet werden. Das Industriegetriebe 10 ist im bestimmungsgemäßen Gebrauch im Wesentlichen vertikal ausgerichtet, so dass eine Hauptdrehachse 12 in entlang einer Schwerkraftrichtung 14 ausgerichtet ist. Am in Schwerkraftrichtung 14 unteren Ende des Industriegetriebes 10 kann eine als Abtriebswelle verwendete Leistungswelle 16 ein in dem Industriegetriebe 10 gewandeltes Drehmoment aus dem Industriegetriebe 10 ausleiten. Das Industriegetriebe 10 weist mindestens ein Planetengetriebe 18 auf, wobei vorzugsweise zwei oder mehr Planetenstufen vorgesehen sein können. Das eine letzte Planetenstufe ausbildende Planetengetriebe 18 weist einen Planetenträger 20 auf, der insbesondere einstückig mit einer Planetenträgerwelle 21 verbunden ist, die im dargestellten Ausführungsbeispiel gleichzeitig die Leistungswelle 16 ausbildet. Der Planetenträger 20 weist mindestens eine drehfest mit dem Planetenträger 20 befestigte Planetenradachse 22 auf, an der ein Planetenrad 24 relativ drehbar über ein Gleitlager oder Wälzlager ausgestaltetes Planetenradlager 26 gelagert ist. Alternativ kann das Planetenrad 24 eine mit dem Planetenrad 24 mitdrehende Planetenradwelle aufweisen, die innerhalb einer Wange des Planetenträgers 20 gelagert sein kann. Insbesondere sind mindestens drei, vorzugsweise vier, fünf, sechs oder sieben, Planetenräder 24 vorgesehen. Das jeweilige Planetenrad 24 kämmt radial innen mit einem Sonnenrad 27, das mit einer Sonnenradwelle 28 drehfest verbunden ist. Im dargestellten Ausführungsbeispiel wird über die Sonnenradwelle 28 eine von einem Antriebsmotor kommende Antriebsleistung, die gegebenenfalls bereits durch mindestens eine vorgeschaltete Planetenstufe des Industriegetriebes 10 drehzal- und drehmomentgewandelt ist, über das Planetengetriebe 18 an die Leistungswelle 16 übertragen. Die Leistungswelle 16 kann als Abtriebswelle die gewandelte Antriebsleistung direkt oder indirekt an eine Mühlenwelle der Vertikalmühle ausleiten, um einen Mühlteller in Rotation zu versetzten. Radial außen kämmt das jeweilige Planetenrad 24 mit einem Hohlrad 30, das im Vergleich zu der Leistungswelle 16 langsamer läuft. Im dargestellten Ausführungsbeispiel ist das Hohlrad 30 sogar unbeweglich festgehalten und kann an seiner Außenseite eine Außenhülle eines Getriebegehäuses 32 ausbilden, aus der die Leistungswelle 16 herausragt. Im dargestellten Ausführungsbeispiel kann das Getriebegehäuse 32 durch das Hohlrad 30 sowie einem oberen Gehäuseteil 34 und einem unteren Gehäuseteil 36 zusammengesetzt sein. Das obere Gehäuseteil 34 kann an einer nach oben weisenden Stirnseite des Hohlrads 30 befestigt, insbesondere verschraubt sein, wobei das obere Gehäuseteil 34 insbesondere eine Auflagerfläche zur Abstützung eines Antriebsmotors der Vertikalmühle aufweisen kann. Das untere Gehäuseteil 36 kann an einer nach unten weisenden Stirnseite des Hohlrads 30 befestigt, insbesondere verschraubt sein, wobei das untere Gehäuseteil 36 und damit auch das Hohlrad 30 über ein, insbesondere als Wälzlager ausgestaltetes, Lager 38 an der Leistungswelle 16 gelagert ist. Das Hohlrad 30 und das untere Gehäuseteil 36 bilden eine Getriebekomponente 40 des Industriegetriebes 10 aus, die radial außerhalb zu der Leistungswelle 16 vorgesehen ist.

Das Lager 38 kann mit einem Schmiermittel, insbesondere Schmieröl, geschmiert sein, wobei es möglich ist, dass Schmiermittel aus dem Lager 38 verdrängt wird und in Schwerkraftrichtung 14 nach unten abtropfen kann. Damit eine Leckage vermieden wird, sind die Getriebekomponente 40 und die Leistungswelle 16 Teil einer Dichtungsanordnung 42, die eine berührungslose erste Dichtung 44 und eine über einen ersten Überlaufkanal 46 kommunizierende berührungslose zweite Dichtung 48 aufweist, an der sich schließlich über einen zweiten Überlaufkanal 80 eine auf einem geringeren Radius vorgesehene Enddichtung 50 anschließt.

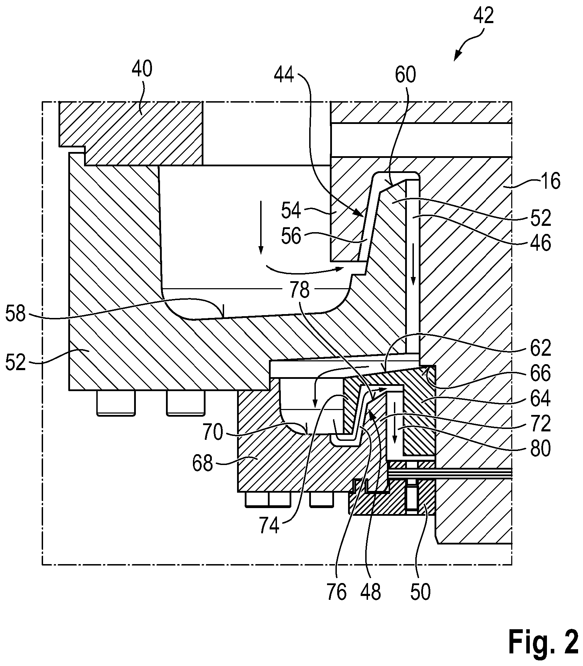

Wie in Fig. 2 im Detail dargestellt ist, weist die Dichtungsanordnung 42 einen ersten Dichtungsdeckel 52, der durch eine axiale Relativbewegung mit einem abstehenden ersten Fortsatz 52 in einen von der Leistungswelle 16 ausgebildeten Hinterschnitt eingreifen kann, wobei der Hinterschnitt einen ersten hinterschnittenen Kegelsitz 54 ausbildet. Zwischen dem ersten Kegelsitz 54 und dem ersten Fortsatz 52 ist ein kegeliger erster Dichtspalt 56 der ersten Dichtung 44 ausgebildet, der sich entgegen der Schwerkraftrichtung 14 und von radial außen nach radial innen erstreckt. Der erste Dichtungsdeckel 52 kann mit einer unteren Stirnseite der Getriebekomponente 40 befestigt sein und ein erstes Sammelvolumen 58 begrenzen, in welches das von dem Lager 38 kommende Schmiermittel abtropfen kann. Für eine Leckage des Schmiermittels wäre es erforderlich, dass das Schmiermittel von dem ersten Sammelvolumen 58 entgegen der Schwerkraftrichtung 14 den ersten Dichtspalt 56 der ersten Dichtung 44 passiert. Zudem kann der die radial äußere Mantelfläche des ersten Dichtspalts 56 ausbildende erste Kegelsitz 54 mit der Drehzahl des Leistungswelle 16 drehen und auf das in den ersten Dichtspalt 56 gelangte Schmiermittel eine Fliehkraft aufprägen, aufgrund dessen das Schmiermittel nach radial außen und an dem erste Kegelsitz 54 entlang nach radial außen zurück in das erste Sammelvolumen 58 gefördert wird. Am oberen Ende des ersten Dichtspalts 56 schließt sich eine erste Rampe 60 an, die zu einem größeren Strömungsquerschnitt als im ersten Dichtspalt 56 führt. Den ersten Dichtspalt 56 passierendes Schmiermittel kann sich an der ersten Rampe 60 absetzen und schwerkraftgetrieben zurück in den ersten Dichtspalt 56 fließen.

Selbst wenn Schmiermittel die erste Dichtung 44 passieren sollte, kann das Schmiermittel über den ersten Überlaufkanal 46 an einer nach oben weisenden Stirnseite 62 eines drehfest mit der Leistungswelle 16 befestigten Zwischenstücks 64 gelangen. Das Zwischenstück 64 ist auf einen geringeren Durchmesser als der erste Überlaufkanal 46 auf die Leistungswelle 16 bis zu einer Stufe 66 aufgepresst. Die Stirnseite 62 des Zwischenstücks 64 ist zur Horizontalen angeschrägt, so dass das ankommende Schmiermittel schwerkraftgetrieben über die Stirnseite 62 nach radial außen fließen kann. Zudem kann das Zwischenstück 64 mit der Drehzahl der Leistungswelle 16 rotieren und die Bewegung des Schmiermittels nach radial außen durch aufgeprägte Fliehkräfte unterstützen. Das Schmiermittel kann von der Stirnseite 62 des Zwischenstücks 64 in ein von einem zweiten Dichtungsdeckel 68 begrenztes zweites Sammelvolumen 70 gelangen. Der zweite Dichtungsdeckel 68 kann durch eine axiale Relativbewegung mit einem abstehenden zweiten Fortsatz 72 in einen von dem Zwischenstück 64 ausgebildeten Hinterschnitt eingreifen kann, wobei der Hinterschnitt einen zweiten hinterschnittenen Kegelsitz 74 ausbildet. Zwischen dem zweiten Kegelsitz 74 und dem zweiten Fortsatz 72 ist ein kegeliger zweiter Dichtspalt 76 der zweiten Dichtung 48 ausgebildet, der sich entgegen der Schwerkraftrichtung 14 und von radial außen nach radial innen erstreckt. Der zweite Dichtungsdeckel 68 kann mit einer unteren Stirnseite der Getriebekomponente 40 und/oder mit einer unteren Stirnseite des ersten Dichtungsdeckel 52 befestigt sein. Für eine Leckage des Schmiermittels wäre es erforderlich, dass das Schmiermittel von dem zweiten Sammelvolumen 70 entgegen der Schwerkraftrichtung 14 den zweiten Dichtspalt 76 der zweiten Dichtung 48 passiert. Zudem kann der die radial äußere Mantelfläche des zweiten Dichtspalts 76 ausbildende zweite Kegelsitz 74 mit der Drehzahl des Leistungswelle 16 drehen und auf das in den zweiten Dichtspalt 76 gelangte Schmiermittel eine Fliehkraft aufprägen, aufgrund dessen das Schmiermittel nach radial außen und an dem zweiten Kegelsitz 74 entlang nach radial außen zurück in das zweite Sammelvolumen 70 gefördert wird. Am oberen Ende des zweiten Dichtspalts 76 schließt sich eine zweite Rampe 78 an, die zu einem größeren Strömungsquerschnitt als im zweiten Dichtspalt 76 führt. Den zweiten Dichtspalt 76 passierendes Schmiermittel kann sich an der zweiten Rampe 78 absetzen und schwerkraftgetrieben zurück in den zweiten Dichtspalt 76 fließen. Selbst wenn das Schmiermittel auch die berührungslose zweite Dichtung 48 passieren sollte und über einen zweiten Überlaufkanal 80 zur Enddichtung 50 gelenkt, kann die beispielsweise als gefettete Labyrinthdichtung ausgestaltete Enddichtung 50 eine Leckage des Schmiermittels verhindern. Insbesondere ist die Enddichtung 50 lediglich als Staubdichtung ausgestaltet, die ein Eindringen von Staub in das Industriegetriebe 10 verhindern soll. Da an der Enddichtung 50, sofern überhaupt, nur sehr wenig Schmiermittel ankommt, ist eine geringe Dichtwirkung der Enddichtung gegen eine Leckage von Schmiermittel bereits ausreichend.

## Patentansprüche

1. Dichtungsanordnung (42) für ein Industriegetriebe (10), mit
einer vertikal ausgerichteten unteren Leistungswelle (16) zum Drehmomentaustausch mit dem Industriegetriebe (10),
einer radial außerhalb zu der Leistungswelle (16) vorgesehenen Getriebekomponente (40) des Industriegetriebes (10), wobei die Leistungswelle (16) im bestimmungsgemäßen Betrieb eine größere Drehzahl als die Getriebekomponente (40) aufweist,
wobei zwischen der Getriebekomponente (40) und der Leistungswelle (16) eine berührungslose erste Dichtung (44) vorgesehen ist,
wobei die erste Dichtung (44) einen zur Schwerkraftrichtung (14) angeschrägten und entgegen der Schwerkraftrichtung (14) von radial außen nach radial innen verlaufenden konischen ersten Dichtspalt (56) und einen zumindest zu einem Großteil in Schwerkraftrichtung (14) nach unten verlaufenden ersten Überlaufkanal (46) aufweist,
wobei der erste Dichtspalt (56) mit dem ersten Überlaufkanal (46) kommuniziert,
wobei der erste Überlaufkanal (46) in Schwerkraftrichtung (14) unterhalb des ersten Dichtspalts (56) endet und als Ringspalt ausgebildet ist, **dadurch gekennzeichnet,**
**dass** der Überlaufkanal einen im Wesentlichen konstanten Strömungsquerschnitt aufweist und zur Vermeidung einer Labyrinthdichtung aus einer einzelnen Spaltdichtung besteht.

2. Dichtungsanordnung (42) nach Anspruch 1, wobei eine radial innere Mantelfläche des ersten Dichtspalts (56) drehfest mit der Getriebekomponente (40) und eine radial äußere Mantelfläche des ersten Dichtspalts (56) drehfest mit der Leistungswelle (16) befestigt ist.

3. Dichtungsanordnung (42) nach Anspruch 1 oder 2, wobei die Getriebekomponente (40) über ein einen Lagerspalt überbrückendes Lager (38) relativ drehbar zur Leistungswelle (16) gelagert ist, wobei der erste Dichtspalt (56) mit dem Lagerspalt kommuniziert.

4. Dichtungsanordnung (42) nach einem der Ansprüche 1 bis 3, wobei ein mit der Getriebekomponente (40) verbundener ersten Dichtungsdeckel (52) vorgesehen ist, wobei der erste Dichtungsdeckel (52) zumindest einen Teil des ersten Dichtspalts (56) radial innen begrenzt.

5. Dichtungsanordnung (42) nach Anspruch 4, wobei der ersten Dichtungsdeckel (52) ein in Schwerkraftrichtung (14) unterhalb des ersten Dichtspalts (56) vorgesehenes erstes Sammelvolumen (58) zum Sammeln von Schmiermittel aufweist.

6. Dichtungsanordnung (42) nach einem der Ansprüche 1 bis 5, wobei die Leistungswelle (16) einen hinterschnittenen ersten Kegelsitz (54) zur radial äußeren Begrenzung des ersten Dichtspalts (56) aufweist.

7. Dichtungsanordnung (42) nach einem der Ansprüche 1 bis 6, wobei zwischen dem ersten Dichtspalt (56) und dem ersten Überlaufkanal (46) eine erste Rampe (60) zur Ausbildung eines größeren Strömungsquerschnitts als im ersten Dichtspalt (56) ausgeformt ist.

8. Dichtungsanordnung (42) nach einem der Ansprüche 1 bis 7, wobei eine radial äußere Kanalwand des ersten Überlaufkanals (46), eine/die radial innere Mantelfläche des ersten Dichtspalts (56) und eine Sammelfläche zur unteren Begrenzung eines/des in Schwerkraftrichtung (14) unterhalb des ersten Dichtspalts (56) vorgesehenes erstes Sammelvolumen (58) zum Sammeln von Schmiermittel einstückig, insbesondere durch genau einen/den ersten Dichtungsdeckel (52), ausgebildet sind.

9. Dichtungsanordnung (42) nach einem der Ansprüche 1 bis 8, wobei mit der Leistungswelle (16) ein Zwischenstück (64) drehfest verbunden ist, wobei das Zwischenstück (64) eine zum ersten Überlaufkanal (46) weisende Stirnseite (62) zum schwerkraftgetriebene und/oder fliehkraftgetriebenen Abführen von aus dem ersten Überlaufkanal (46) kommenden Schmiermittel nach radial außen aufweist.

10. Dichtungsanordnung (42) nach Anspruch 9, wobei die Leistungswelle (16) eine einen Axialanschlag für das Zwischenstück (64) ausbildende Stufe (66) aufweist, wobei eine radiale Innenseite des Zwischenstücks (64) radial weiter innen als der erste Überlaufkanal (46) vorgesehen ist.

11. Dichtungsanordnung (42) nach einem der Ansprüche 1 bis 10, wobei in Schwerkraftrichtung (14) unterhalb der ersten Dichtung (44) zwischen der Getriebekomponente (40) und der Leistungswelle (16) eine berührungslose zweite Dichtung (48) zur Bereitstellung eines Dichtwiderstands gegen die erste Dichtung (44) passierendes Schmiermittel vorgesehen ist, wobei die zweite Dichtung (48) einen zur Schwerkraftrichtung (14) angeschrägten und entgegen der Schwerkraftrichtung (14) von radial außen nach radial innen verlaufenden konischen zweiten Dichtspalt (76) aufweist.

12. Dichtungsanordnung (42) nach Anspruch 11, wobei
eine radial innere Mantelfläche des zweiten Dichtspalts (76) drehfest mit der Getriebekomponente (40) und eine radial äußere Mantelfläche des zweiten Dichtspalts (76) drehfest mit der Leistungswelle (16) befestigt ist und/oder ein mit der Getriebekomponente (40) unmittelbar oder mittelbar verbundener zweiter Dichtungsdeckel (68) vorgesehen ist, wobei der zweite Dichtungsdeckel (68) zumindest einen Teil des zweiten Dichtspalts (76) radial innen begrenzt und/oder der zweite Dichtungsdeckel (76) ein in Schwerkraftrichtung (14) unterhalb des zweiten Dichtspalts (76) vorgesehenes zweites Sammelvolumen (70) zum Sammeln und/oder Abführen von Schmiermittel aufweist und/oder
das Zwischenstück (64) einen zweiten hinterschnittenen Kegelsitz (74) zur radial äußeren Begrenzung des zweiten Dichtspalts (76) aufweist und/oder der zweite Dichtspalt (76) mit einem zumindest zu einem Großteil in Schwerkraftrichtung (14) nach unten verlaufenden zweiten Überlaufkanal (80) kommuniziert und/oder
zwischen dem zweiten Dichtspalt (76) und dem zweiten Überlaufkanal (80) eine zweite Rampe (78) zur Ausbildung eines größeren Strömungsquerschnitts als im zweiten Dichtspalt (76) ausgeformt ist.

13. Dichtungsanordnung (42) nach Anspruch 11 oder 12, wobei in Schwerkraftrichtung (14) unterhalb der zweiten Dichtung (48) eine mit dem zweiten Dichtspalt (76) kommunizierende Enddichtung (50), insbesondere Labyrinthdichtung oder berührende Dichtung, vorgesehen ist, wobei die Enddichtung (50) auf einem geringeren Radius als der erste Dichtspalt (56) und der zweite Dichtspalt (76) vorgesehen ist.

14. Industriegetriebe (10), insbesondere zum Antrieb einer Vertikalmühle, mit einer vertikal ausgerichteten Leistungswelle (16) zum Einleiten eines Drehmoments, wobei die Leistungswelle (16) eine Planetenträgerwelle (21) oder Sonnenwelle (28) eines Planetengetriebes (18) ist, und einer im Vergleich zur Leistungswelle (16) im bestimmungsgemäßen Gebrauch langsamer drehenden oder stillstehenden Getriebekomponente (40), wobei die Getriebekomponente (40) als Hohlrad (30) und/oder Getriebegehäuse (32) des Planetengetriebes (18) ausgebildet ist, und einer Dichtungsanordnung (42) nach einem der Ansprüche 1 bis 13 zum Zurückhalten von Schmiermittel.

## Claims

1. Seal assembly (42) for an industrial transmission (10), comprising
a vertically aligned lower power shaft (16) for exchanging torque with the industrial transmission (10), a transmission component (40) of the industrial transmission (10), said transmission component (40) being provided radially outside the power shaft (16), wherein the power shaft (16) comprises an intended greater rotational speed than the transmission component (40) during operation,
wherein a contactless first seal (44) is provided between the transmission component (40) and the power shaft (16), wherein the first seal (44) comprises a conical first sealing gap (56) which is bevelled in the direction of gravity (14) and runs from radially on the outside to radially on the inside counter to the direction of gravity (14), and a first overflow channel (46) running downwards to at least a large extent in the direction of gravity (14),
wherein the first sealing gap (56) communicates with the first overflow channel (46),
wherein the first overflow channel (46) ends below the first sealing gap (56) in the direction of gravity (14) and is in the form of an annular gap, **characterized in that** the overflow channel comprises a substantially constant flow cross section and consists of a single gap seal, for the purpose of avoiding a labyrinth seal.

2. Seal assembly (42) according to Claim 1, wherein a radially inner circumferential surface of the first sealing gap (56) is fastened to the transmission component (40) for rotation therewith and a radially outer circumferential surface of the first sealing gap (56) is fastened to the power shaft (16) for rotation therewith.

3. Seal assembly (42) according to Claim 1 or 2, wherein the transmission component (40) is mounted rotatably relative to the power shaft (16) via a bearing (38) bridging a bearing gap, wherein the first sealing gap (56) communicates with the bearing gap.

4. Seal assembly (42) according to any one of Claims 1 to 3, wherein a first sealing cover (52) which is connected to the transmission component (40) is provided, wherein the first sealing cover (52) bounds at least part of the first sealing gap (56) radially on the inside.

5. Seal assembly (42) according to Claim 4, wherein the first sealing cover (52) comprises a first collecting volume (58), which is provided below the first sealing gap (56) in the direction of gravity (14), for collecting lubricant.

6. Seal assembly (42) according to any one of Claims 1 to 5, wherein the power shaft (16) comprises an undercut first conical seat (54) for the radially outer boundary of the first sealing gap (56).

7. Seal assembly (42) according to any one of Claims 1 to 6, wherein a first ramp (60) for forming a larger flow cross section than in the first sealing gap (56) is formed between the first sealing gap (56) and the first overflow channel (46).

8. Seal assembly (42) according to any one of Claims 1 to 7, wherein a radially outer channel wall of the first overflow channel (46), a/the radially inner circumferential surface of the first sealing gap (56), and a collecting surface for the lower boundary of a/the first collecting volume (58), which is provided below the first sealing gap (56) in the direction of gravity (14), for collecting lubricant are formed integrally, in particular by precisely one/the first sealing cover (52).

9. Seal assembly (42) according to any one of Claims 1 to 8, wherein an intermediate piece (64) is connected to the power shaft (16) for rotation therewith, wherein the intermediate piece (64) comprides an end face (62) facing the first overflow channel (46) for the gravity-driven and/or centrifugally driven discharge radially to the outside of lubricant coming from the first overflow channel (46).

10. Seal assembly (42) according to Claim 9, wherein the power shaft (16) comprises a step (66) forming an axial stop for the intermediate piece (64), wherein a radial inside of the intermediate piece (64) is provided radially further on the inside than the first overflow channel (46).

11. Seal assembly (42) according to any one of Claims 1 to 10, wherein a contactless second seal (48) for providing a sealing resistance against lubricant passing the first seal (44) is provided below the first seal (44) between the transmission component (40) and the power shaft (16) in the direction of gravity (14), wherein the second seal (48) comprises a conical second sealing gap (76) which is bevelled in the direction of gravity (14) and runs from radially on the outside to radially on the inside counter to the direction of gravity (14).

12. Seal assembly (42) according to Claim 11, wherein
a radially inner circumferential surface of the second sealing gap (76) is fastened to the transmission component (40) for rotation therewith and a radially outer circumferential surface of the second sealing gap (76) is fastened to the power shaft (16) for rotation therewith, and/or
a second sealing cover (68) connected directly or indirectly to the transmission component (40) is provided, wherein the second sealing cover (68) bounds at least a part of the second sealing gap (76) radially on the inside, and/or
the second sealing cover (76) comprises a second collecting volume (70), which is provided below the second sealing gap (76) in the direction of gravity (14), for collecting and/or discharging lubricant, and/or the intermediate piece (64) comprises a second undercut conical seat (74) for the radially outer boundary of the second sealing gap (76), and/or
the second sealing gap (76) communicates with a second overflow channel (80) running downwards to at least a large extent in the direction of gravity (14), and/or a second ramp (78) for forming a larger flow cross section than in the second sealing gap (76) is formed between the second sealing gap (76) and the second overflow channel (80).

13. Seal assembly (42) according to Claim 11 or 12, wherein an end seal (50) communicating with the second sealing gap (76), in particular labyrinth seal or contacting seal, is provided below the second seal (48) in the direction of gravity (14), wherein the end seal (50) is provided on a smaller radius than the first sealing gap (56) and the second sealing gap (76).

14. Industrial transmission (10), in particular for driving a vertical mill, comprising a vertically aligned power shaft (16) for introducing a torque, wherein the power shaft (16) is a planet carrier shaft (21) or sun shaft (28) of a planetary transmission (18), and comprising a transmission component (40), which rotates more slowly in comparison to the power shaft (16) during use as intended or is at a standstill, wherein the transmission component (40) is in the form of a ring gear (30) and/or transmission housing (32) of the planetary transmission (18), and comprising a seal assembly (42) according to any one of Claims 1 to 13 for retaining lubricant.

## Revendications

1. Agencement d'étanchéité (42) pour une transmission industrielle (10), avec
un arbre de puissance inférieur (16) orienté verticalement pour l'échange de couple avec la transmission industrielle (10),
un composant de transmission (40) de la transmission industrielle (10) prévu radialement à l'extérieur de l'arbre de puissance (16), l'arbre de puissance (16) présentant une vitesse de rotation supérieure à celle du composant de transmission (40) en fonctionnement conforme,
dans lequel un premier joint d'étanchéité sans contact (44) est prévu entre le composant de transmission (40) et l'arbre de puissance (16),
le premier joint d'étanchéité (44) présentant une première fente d'étanchéité conique (56) inclinée par rapport à la direction de la force de gravité (14) et s'étendant de radialement à l'extérieur vers radialement à l'intérieur à l'encontre de la direction de la force de gravité (14), et un premier canal de débordement (46) s'étendant au moins en grande partie vers le bas dans la direction de la force de gravité (14),
dans lequel la première fente d'étanchéité (56) communique avec le premier canal de débordement (46), dans lequel le premier canal de débordement (46) se termine, dans la direction de la force de gravité (14), en dessous de la première fente d'étanchéité (56) et est réalisé sous forme de fente annulaire, **caractérisé en ce que** le canal de débordement présente une section transversale d'écoulement essentiellement constante et est constitué d'un seul joint d'étanchéité à fente pour éviter un joint d'étanchéité labyrinthique.

2. Agencement d'étanchéité (42) selon la revendication 1, dans lequel une surface d'enveloppe radialement intérieure de la première fente d'étanchéité (56) est fixée de manière solidaire en rotation avec le composant de transmission (40) et une surface d'enveloppe radialement extérieure de la première fente d'étanchéité (56) est fixée de manière solidaire en rotation avec l'arbre de puissance (16).

3. Agencement d'étanchéité (42) selon la revendication 1 ou 2, dans lequel le composant de transmission (40) est supporté de manière rotative par rapport à l'arbre de puissance (16) par l'intermédiaire d'un palier (38) couvrant une fente de palier, dans lequel la première fente d'étanchéité (56) communique avec la fente de palier.

4. Agencement d'étanchéité (42) selon l'une quelconque des revendications 1 à 3, dans lequel il est prévu un premier couvercle d'étanchéité (52) relié au composant de transmission (40), dans lequel le premier couvercle d'étanchéité (52) délimite radialement vers l'intérieur au moins une partie de la première fente d'étanchéité (56) .

5. Agencement d'étanchéité (42) selon la revendication 4, dans lequel le premier couvercle d'étanchéité (52) présente un premier volume de collecte (58) prévu en dessous de la première fente d'étanchéité (56) dans la direction de la force de gravité (14) pour collecter du lubrifiant.

6. Agencement d'étanchéité (42) selon l'une quelconque des revendications 1 à 5, dans lequel l'arbre de puissance (16) présente un premier siège conique (54) en contre-dépouille pour la délimitation radialement extérieure de la première fente d'étanchéité (56).

7. Agencement d'étanchéité (42) selon l'une quelconque des revendications 1 à 6, dans lequel une première rampe (60) est formée entre la première fente d'étanchéité (56) et le premier canal de débordement (46) pour réaliser une section transversale d'écoulement plus grande que dans la première fente d'étanchéité (56).

8. Agencement d'étanchéité (42) selon l'une quelconque des revendications 1 à 7, dans lequel une paroi de canal radialement extérieure du premier canal de débordement (46), une/la surface d'enveloppe radialement intérieure de la première fente d'étanchéité (56) et une surface de collecte pour la délimitation inférieure d'un/du premier volume de collecte (58) prévu dans la direction de la force gravité (14) en dessous de la première fente d'étanchéité (56) pour la collecte de lubrifiant sont réalisées d'un seul tenant, notamment par exactement un/le premier couvercle d'étanchéité (52).

9. Agencement d'étanchéité (42) selon l'une quelconque des revendications 1 à 8, dans lequel une pièce intermédiaire (64) est reliée de manière solidaire en rotation à l'arbre de puissance (16), la pièce intermédiaire (64) présentant un côté frontal (62) orienté vers le premier canal de débordement (46) pour l'évacuation radialement vers l'extérieur, par gravité et/ou par force centrifuge, de lubrifiant provenant du premier canal de débordement (46).

10. Agencement d'étanchéité (42) selon la revendication 9, dans lequel l'arbre de puissance (16) présente un gradin (66) réalisant une butée axiale pour la pièce intermédiaire (64), un côté intérieur radial de la pièce intermédiaire (64) étant prévu radialement plus à l'intérieur que le premier canal de débordement (46).

11. Agencement d'étanchéité (42) selon l'une quelconque des revendications 1 à 10, dans lequel il est prévu, dans la direction de la force de gravité (14), en dessous du premier joint d'étanchéité (44), entre le composant de transmission (40) et l'arbre de puissance (16), un deuxième joint d'étanchéité (48) sans contact pour fournir une résistance d'étanchéité au lubrifiant passant par le premier joint d'étanchéité (44), le deuxième joint d'étanchéité (48) présentant une deuxième fente d'étanchéité (76) conique, inclinée par rapport à la direction de la force de gravité (14) et s'étendant de radialement à l'extérieur vers radialement à l'intérieur à l'encontre de la direction de la force de gravité (14).

12. Agencement d'étanchéité (42) selon la revendication 11, dans lequel
une surface d'enveloppe radialement intérieure de la deuxième fente d'étanchéité (76) est fixée de manière solidaire en rotation avec le composant de transmission (40) et une surface d'enveloppe radialement extérieure de la deuxième fente d'étanchéité (76) est fixée de manière solidaire en rotation avec l'arbre de puissance (16) et/ou
il est prévu un deuxième couvercle d'étanchéité (68) relié directement ou indirectement au composant de transmission (40), le deuxième couvercle d'étanchéité (68) délimitant radialement vers l'intérieur au moins une partie de la deuxième fente d'étanchéité (76) et/ou le deuxième couvercle d'étanchéité (76) présente un deuxième volume de collecte (70) prévu dans la direction de la force de gravité (14) en dessous de la deuxième fente d'étanchéité (76) pour collecter et/ou évacuer le lubrifiant et/ou
la pièce intermédiaire (64) présente un deuxième siège conique (74) en contre-dépouille pour la délimitation radialement extérieure de la deuxième fente d'étanchéité (76) et/ou
la deuxième fente d'étanchéité (76) communique avec un deuxième canal de débordement (80) s'étendant vers le bas au moins en grande partie dans la direction de la force de gravité (14) et/ou
une deuxième rampe (78) est formée entre la deuxième fente d'étanchéité (76) et le deuxième canal de débordement (80) pour réaliser une section transversale d'écoulement plus grande que dans la deuxième fente d'étanchéité (76).

13. Agencement d'étanchéité (42) selon la revendication 11 ou 12, dans lequel un joint d'étanchéité d'extrémité (50), notamment un joint d'étanchéité labyrinthique ou un joint d'étanchéité de contact, communiquant avec la deuxième fente d'étanchéité (76) est prévu en dessous du deuxième joint d'étanchéité (48) dans la direction de la force de gravité (14), le joint d'étanchéité d'extrémité (50) étant prévu sur un rayon inférieur à celui de la première fente d'étanchéité (56) et de la deuxième fente d'étanchéité (76).

14. Transmission industrielle (10), notamment pour l'entraînement d'un broyeur vertical, avec un arbre de puissance (16) orienté verticalement pour introduire un couple de rotation, l'arbre de puissance (16) étant un arbre porte-satellites (21) ou un arbre solaire (28) d'un engrenage planétaire (18), et un composant de transmission (40) tournant plus lentement ou à l'arrêt par rapport à l'arbre de puissance (16) en utilisation conforme, le composant de transmission (40) étant réalisé sous forme de couronne (30) et/ou de boîtier de transmission (32) de l'engrenage planétaire (18), et un agencement d'étanchéité (42) selon l'une quelconque des revendications 1 à 13 pour retenir le lubrifiant.
